# EUROPÄISCHE PATENTSCHRIFT

(11) **EP 3 942 376 B1**
(45) Veröffentlichungstag und Bekanntmachung des Hinweises auf die Patenterteilung: **04.10.2023**
(21) Anmeldenummer: 20711782.1
(22) Anmeldetag: 04.03.2020
(51) Int. Cl.: G05B 23/02, G05B 19/406

(54) **VERFAHREN ZUM BESTIMMEN EINER EIGENSCHAFT EINER MASCHINE, INSBESONDERE EINER WERKZEUGMASCHINE, OHNE MESSTECHNISCHES ERFASSEN DER EIGENSCHAFT**
METHOD FOR DETERMINING A PROPERTY OF A MACHINE, IN PARTICULAR A MACHINE TOOL, WITHOUT METROLOGICALLY CAPTURING THE PROPERTY
PROCÉDÉ D'ÉTABLISSEMENT D'UNE PROPRIÉTÉ D'UNE MACHINE, EN PARTICULIER D'UNE MACHINE-OUTIL, SANS DÉTECTION DE LA PROPRIÉTÉ À L'AIDE D'UNE TECHNIQUE DE MESURE

(30) Priorität: 22.03.2019 DE 102019107363
(43) Veröffentlichungstag der Anmeldung: 26.01.2022
(73) Patentinhaber: Schaeffler Technologies AG & Co. KG, 91074 Herzogenaurach (DE)
(72) Erfinder: LIEDER, Stefan, 90439 Nürnberg (DE); OETTE, Cedric, 91058 Erlangen (DE); HAFNER, Matthias, 61191 Rosbach v.d.H (DE)
(86) Internationale Anmeldenummer: PCT/DE2020/100144
(87) Internationale Veröffentlichungsnummer: WO 2020/192822

(56) Entgegenhaltungen:
- US-A1- 2003 061 008
- US-A1- 2007 088 550
- US-A1- 2016 091 393
- US-A1- 2018 314 238
- US-B2- 7 136 716

## Beschreibung

Die Erfindung betrifft ein computerimplementiertes Verfahren zum Bestimmen einer Eigenschaft einer Maschine, insbesondere einer Werkzeugmaschine, ohne messtechnisches Erfassen der Eigenschaft. Ferner betrifft die Erfindung ein System zum Bestimmen einer Eigenschaft einer Maschine, insbesondere einer Werkzeugmaschine, ohne messtechnisches Erfassen der Eigenschaft. Ein weiterer Gegenstand der Erfindung ist ein computerimplementiertes Verfahren zum Bestimmen eines voraussichtlichen Qualitätszustands eines mit einer Maschine gefertigten Bauteils.

Anwendung finden kann die Erfindung beim Betrieb von Maschinen, insbesondere im Umfeld der industriellen Fertigung von Bauteilen. Bei derartigen Anwendungen müssen die Maschinen, insbesondere Werkzeugmaschinen, nicht nur eine hohe Leistungsfähigkeit, sondern auch eine hohe Verfügbarkeit aufweisen. Allerdings kommt es, beispielsweise aufgrund von Abnutzungserscheinungen, oftmals zu überraschenden Ausfällen der Maschinen und/oder zu Qualitätsdefiziten der hergestellten Produkte. Die Gründe für solche Ausfälle liegen oftmals darin, dass Betriebspunkte der Maschinen ungünstig gewählt sind oder der Zustand von Verschleißteilen der Maschine nicht unmittelbar überwacht werden kann.

Vor diesem Hintergrund ist es wünschenswert, Eigenschaften einer Maschine zu bestimmen, die messtechnisch nicht erfasst werden, um daraus Handlungsempfehlungen, beispielsweise zur Wartung der Maschine oder zur Optimierung des Betriebsmodus, abzuleiten. Dies kann beispielsweise durch statistische Berechnungen erfolgen. Allerdings erschweren sich ändernde Betriebsmodi bzw. das Fertigen verschiedener Bauteile auf derselben Maschine die, insbesondere dynamische, Berechnung von Abnutzungszuständen und der Lebensdauern der Komponenten der Maschinen.

In der US 2016/0 091 393 A1 wird ein Verfahren zum Analysieren von Betriebsdaten einer Maschine beschrieben, bei welchem Bearbeitungsverfahren anhand eines Abgleichs ähnlicher Prozesse durch ein Interactive Closest Point (ICP) - Verfahren identifiziert werden. Die Prozesse werden geclustert. Eine Verschlechterung eines Werkzeugs wird anhand eines Trends der Betriebsdaten in einem Cluster von Bearbeitungsverfahren durch einen Monotonietest detektiert.

Die US 2003/061008 A1 beschreibt ein Verfahren zur Überwachung einer Maschine auf signifikante Abweichungen vom normalen Betrieb umfassend das Sammeln von Sensordaten über die Maschine an einem ersten Verarbeitungselement. Das erste Verarbeitungselement führt eine schmalbandige Frequenzbereichsverarbeitung durch, um ein Segment von Sensordaten zu bestimmen, das eine Abweichung vom normalen Betrieb anzeigt, die eine Schwellenwertabweichung überschreitet. Eine Nachricht mit dem Segment der Sensordaten wird an ein zweites Verarbeitungselement gesendet. Als Reaktion auf den Empfang der Nachricht führt das zweite Verarbeitungselement eine unterschiedliche Schmalband-Frequenzbereichsverarbeitung durch, um festzustellen, ob die Abweichung vom normalen Betrieb für die Wartung der Maschine signifikant ist. Wenn festgestellt wird, dass die Abweichung vom normalen Betrieb für die Wartung der Maschine signifikant ist, wird die Abweichung gemeldet, um die Maschine zu warten.

Die US 2007/088550 A1 beschreibt ein Verfahren zur Wartungsvorhersage von Maschinen mit dem Sammeln von Merkmalsdaten für die Maschine, das mehrere Merkmalsvektoren umfasst, wobei mindestens einige Merkmalsvektoren standardisiert werden, um Kompatibilität zwischen verschiedenen Vektoren zu erleichtern, wobei mindestens einige standardisierte Merkmalsvektoren in entsprechende zweidimensionale Merkmalsvektoren transformiert werden und mindestens einige zweidimensionale Merkmalsvektoren auf Basis vom Maschinenbetriebszustand geclustert werden, wobei ähnliche Schritte mit zusätzlichen Merkmalsdaten von der Maschine durchgeführt werden und neu gesammelte zweidimensionale Merkmalsvektoren mit früher geclusterten Merkmalsvektoren verglichen werden, um eine Wartungsvorhersageinformation für eine Maschine zu liefern.

US 2018/314238 A1 beschreibt eine Datenverarbeitungsvorrichtung umfassend eine Erfassungsschaltung, die Zeitreihendaten erfasst, die eine Vielzahl von Werten umfassen, die in einer Vielzahl von Kanälen zu mehreren Zeitpunkten beobachtet werden, eine Berechnungsschaltung,die einen Änderungstrend der beobachteten Werte zu jedem der Zeitpunkte kanalweise berechnet, einen Speicher für eine Vielzahl von Beurteilungstabellen, eine Vergleichsschaltung zum Vergleich von Änderungstrenddaten und eine Benachrichtigungsausgangsschaltung zur Ausgabe einer Benachrichtigung über eine zeitliche Änderung der beobachteten Werte auf der Grundlage eines Vergleichsergebnisses.

Die US 7 136 716 B2 beschreibt ein Überwachungssystem mit einer Vielzahl von Vorrichtungen, einem Empfangsmodul, das mit der Vielzahl von Vorrichtungen gekoppelt ist, um Eingänge von den Vorrichtungen zu empfangen, und einem Verarbeitungsmodul, das mit dem Empfangsmodul gekoppelt ist, um eine Analyse der Vorrichtungseingänge zu erzeugen.

Dabei umfasst das Verarbeitungsmodul ein Speichermodul zum Speichern von Modellen eines Phänomens, ein Anwendungsmodul zum Anwenden des Modells auf die Vorrichtungseingänge, ein Diagnosemodul zur Erzeugung eines Descriptors eines Zustands des Phänomens unter Verwendung des Speichermoduls und des Anwendungsmoduls, wobei das Diagnosemodul einen ersten Descriptor unter Verwendung eines ersten Modells und einen zweiten Descriptor unter Verwendung eines zweiten Modells erzeugt, und wobei der Descriptor des Zustands des Phänomens auf Grundlage des ersten Descriptors und des zweiten Descriptors erzeugt wird, ein Benachrichtigungsmodul, das mit dem Verarbeitungsmodul gekoppelt ist, um einen Ausgang unter Verwendung der Analyse zu erzeugen und eine Lieferung des Ausgangs zu managen, und ein Kommunikationsmodul, das mit dem Benachrichtigungsmodul gekoppelt ist, um den Ausgang zu liefern.

Aufgabe der vorliegenden Erfindung ist es, ein zuverlässiges Verfahren zum Bestimmen einer Eigenschaft einer Maschine ohne messtechnisches Erfassen der Eigenschaft anzugeben.

Die Aufgabe wird gelöst durch ein computerimplementiertes Verfahren mit den Merkmalen des Patentanspruchs 1.

Bei dem erfindungsgemäßen Verfahren werden zunächst eine oder mehrere Zeitreihen einer oder mehrerer physikalischer Messgrößen der Maschine erfasst. Unter einer solchen Zeitreihe wird im Sinne der Erfindung ein zeitlicher Verlauf einer physikalischen Messgröße verstanden. In der oder den einzelnen Zeitreihen werden dann Veränderungsstellen detektiert, also Punkte oder Intervalle, in denen eine Veränderung im zeitlichen Verlauf der jeweiligen Messgröße eintritt. Diese Veränderungsstellen können als Markierung für Schnittpunkte in der Zeitreihe eingesetzt werden, welche die Zeitreihe in einzelne Sequenzen unterteilen. Anhand der detektierten Veränderungsstellen werden dann in der oder den einzelnen Zeitreihen Mustersequenz-Instanzen extrahiert. Diese Mustersequenz-Instanzen können beispielsweise durch die Veränderungsstellen begrenzt sein. Eine Mustersequenz-Instanz kann somit durch den zeitlichen Verlauf der jeweiligen Messgröße zwischen zwei detektierten Veränderungsstellen gebildet sein. Anhand der extrahierten Mustersequenz-Instanzen werden mehrere von Mustersequenz-Klassen erzeugt, d.h. in der Menge der extrahierten Mustersequenz-Instanzen identifiziert. Diese Mustersequenz-Klassen umfassen jeweils eine Vielzahl von Mustersequenz-Instanzen, die eine gewisse Ähnlichkeit bzw. eine bestimmte Gemeinsamkeit aufweisen. Dann wird mindestens eine Kenngröße mehrerer Mustersequenz-Instanzen derselben, insbesondere ausgewählten, Mustersequenz-Klasse ermittelt sowie ein zeitlicher Verlauf dieser Kenngröße. Anhand der ermittelten Kenngröße und/oder anhand des zeitlichen Verlaufs der ermittelten Kenngröße wird dann in einem nachfolgenden Verfahrensschritt die Eigenschaft der Maschine ermittelt, die messtechnisch nicht erfasst werden muss. Somit wird es möglich, einen nicht durch eine Messung erfassten physikalischen Effekt, insbesondere eine physikalische Größe oder eine Zustandsangabe, wie zum Beispiel einen Abnutzungsgrad einer Komponente der Maschine, zu bestimmen. Hierdurch kann die Wartung der Maschine genauer geplant werden, so dass die Verfügbarkeit der Maschine erhöht wird.

Die Maschine kann als Werkzeugmaschine ausgebildet sein. Alternativ ist es möglich, dass es sich bei der Maschine um einen Roboter, beispielsweise einen Fertigungsroboter, oder eine Windkraftanlage, ein Automobil, ein Luftfahrzeug, ein Wasserfahrzeug, ein Schienenfahrzeug, ein medizintechnisches Gerät handelt. Bei physikalischen Messgrößen derartiger Maschinen existieren Abschnitte, die kaum Störungsinformationen enthalten bzw. die allgemein kaum Überlagerungen durch verschiedene Informationen haben und sich dadurch besonders gut eignen, um indirekte Informationen bzgl. einer Eigenschaft der Maschine zu extrahieren, sofern geeignete Sensorsignale genutzt werden, hinsichtlich der Eigenschaft der Maschine.

Gemäß einer vorteilhaften Ausgestaltung der Erfindung ist vorgesehen, dass die Eigenschaft der Maschine eine Angabe zu einem Abnutzungszustand der Maschine oder eines Bauteils der Maschine ist. Beispielsweise kann die Eigenschaft ein Abnutzungszustand eines Werkzeugs der Maschine, insbesondere einer Wendeschneidplatte, eines Bohrers oder eines Fräsers, bevorzugt an einem *Tool Center Point* (TCP) der Maschine sein. Derartige Angaben sind messtechnisch oftmals nicht unmittelbar erfassbar oder sind abhängig von einer Vielzahl physikalischer Messgrößen. Durch das erfindungsgemäße Verfahren wird es möglich, solche Angaben zuverlässig zu bestimmen. Alternativ bevorzugt ist es, wenn die Eigenschaft der Maschine eine Angabe zu einer Temperatur in einem vorgegebenen Bereich der Maschine ist, beispielsweise in einem Bereich, in dem ein Temperatursensor zum Messen der Temperatur nicht angeordnet werden kann.

Gemäß einer vorteilhaften Ausgestaltung der Erfindung ist vorgesehen, dass die eine oder die mehreren physikalischen Messgrößen der Maschine ein Drehmoment und/oder eine Drehgeschwindigkeit und/oder ein elektrischer Strom und/oder eine elektrische Spannung und/oder eine Energie und/oder eine Temperatur und/oder eine Beschleunigung und/oder eine Geschwindigkeit und/oder eine Kraft und/oder eine Lageposition ist.

Bevorzugt werden die eine oder die mehreren physikalischen Messgrößen der Maschine durch eine Sensoreinrichtung der Maschine erfasst. Bevorzugt umfasst die Sensoreinrichtung einen Drehmomentsensor und/oder einen Drehgeschwindigkeitssensor und/oder einen Stromsensor und/oder einen Spannungssensor und/oder einen Energiesensor und/oder einen Temperatursensor und/oder einen Beschleunigungssensor und/oder einen Geschwindigkeitssensor und/oder einen Kraftsensor und/oder einen Lagesensor. Die Sensoreinrichtung ist bevorzugt eine Sensoreinrichtung der Maschine, die konfiguriert ist, im Betrieb der Maschine erfasste Messgrößen an eine Steuereinrichtung der Maschine zu übermitteln. Es ist daher nicht erforderlich, eine zusätzliche Sensoreinrichtung an der Maschine vorzusehen, um die zur Ausführung des Verfahrens erforderlichen Messgröße zu ermitteln. Beispielsweise kann die Sensoreinrichtung eine Sensoreinrichtung an einem elektrischen Antrieb der Maschine sein, die im Betrieb der Maschine zum Steuern des Antriebs eingesetzt wird.

Gemäß einer vorteilhaften Ausgestaltung der Erfindung umfasst das Detektieren von Veränderungsstellen in der oder den Zeitreihen das Detektieren von Wechselpunkten. Solche Wechselpunkte (engl. *change point*) werden bevorzugt durch einen Algorithmus zur Wechselpunkterkennung (engl. *change point detection*) ermittelt. Alternativ oder zusätzlich kann das Detektieren von Veränderungsstellen in der oder den Zeitreihen das Detektieren von vorgegebenen Wechselsequenzen umfassen. Die vorgegebenen Wechselsequenzen können in einem Wechselsequenz-Speicher gespeichert sein, welcher bevorzugt in einer von der Maschine separat, insbesondere entfernt angeordneten Vorrichtung vorgesehen ist, beispielsweise in einer Cloud-Speichereinrichtung, die mit der Maschine über eine Kommunikationsverbindung, insbesondere ein Kommunikationsnetzwerk, verbunden ist. Die vorgegeben Wechselsequenzen können beispielsweise aus mindestens drei Punkten bestehen, die eine vorgegebene Abfolge von Steigungen der Zeitreihe definieren.

Gemäß einer vorteilhaften Ausgestaltung der Erfindung ist vorgesehen, dass das Detektieren von Veränderungsstellen in der oder den ersten Zeitreihen direkt anhand der Zeitreihe erfolgt, d.h. im Zeitbereich, beispielsweise durch Bilden einer Ableitung der Zeitreihe und/oder mittels des Douglas-Peucker-Algorithmus. Alternativ oder zusätzlich kann das Detektieren von Veränderungsstellen in der oder den ersten Zeitreihen indirekt anhand einer Transformation der Zeitreihe erfolgen, beispielsweise anhand einer Fourier-Transformation oder einer Wavelet-Transformation. Bevorzugt erfolgt vor dem Detektieren von Veränderungsstellen eine Vorverarbeitung der Zeitreihen und/oder es erfolgt nach dem Detektieren von Veränderungsstellen eine Nachverarbeitung der detektierten Veränderungsstellen.

Bevorzugt umfasst das Extrahieren von Mustersequenz-Instanzen aus den ersten Zeitreihen basierend auf den detektierten Veränderungsstellen ein Ermitteln einer Kandidaten-Sequenz zwischen zwei Veränderungsstellen. Eine solche Kandidaten-Sequenz ist eine Sequenz der Zeitreihe, die möglicherweise eine Mustersequenz-Instanz darstellt. Die Länge der jeweiligen Kandidaten-Sequenz kann mit einer vorgegebenen Mindest-Sequenzlänge verglichen werden. Alternativ kann überprüft werden, ob die Länge der jeweiligen Kandidaten-Sequenz in einem vorgegebenen Sequenzlängenbereich liegt. Bevorzugt wird die Kandidaten-Sequenz nur dann als Mustersequenz-Instanz angesehen, wenn die Länge der Kandidaten-Sequenz größer oder gleich der vorgegebenen Mindest-Sequenzlänge ist bzw. wenn die Länge der Kandidaten-Sequenz in dem vorgegebenen Sequenzlängenbereich liegt.

Als vorteilhaft hat es sich erwiesen, wenn das Erzeugen mehrerer Mustersequenz-Klassen durch ein Verfahren zum unüberwachten maschinellen Lernen (engl. *unsupervised machine learning*) erfolgt. Bei einem derartigen Verfahren zum unüberwachten maschinellen Lernen werden in Eingangsdaten, die die Mustersequenz-Instanzen umfassen, Mustersequenz-Klassen erkannt, so dass die Zuordnung einzelner Mustersequenz-Instanzen zu Mustersequenz-Klassen anschließend bekannt ist. Beispielsweise kann das Erzeugen mehrerer Mustersequenz-Klassen durch eine Hauptkomponentenanalyse oder durch einen k-means-Algorithmus erfolgen.

Vorteilhaft ist es, wenn das Erzeugen von Mustersequenz-Klassen ein Vergleichen mehrerer Kandidaten-Sequenzen umfasst. Bevorzugt wird ein Verlauf mehrerer Kandidaten-Sequenzen, insbesondere eine Abfolge von Abschnitten mit unterschiedlicher Steigung, miteinander verglichen. Das Vergleichen umfasst bevorzugt die Ermittlung eines Ähnlichkeitsgrads zwischen mehreren Kandidaten-Sequenzen. Bevorzugt werden mehrere Kandidaten-Sequenzen derselben Mustersequenz-Klasse zugeordnet, wenn der ermittelte Ähnlichkeitsgrad größer ist als ein vorgegebener Ähnlichkeits-Schwellenwert. Zur Ermittlung des Ähnlichkeitsgrads kann mindestens ein mathematischer Abstand zweier Kandidaten-Sequenzen bestimmt werden, beispielsweise ein Wasserstein-Abstand (Kantorovich-Monge-Rubinstein Metrik) und/oder ein Total variation-Abstand und/oder ein Kolmogorov-Smirnov-Abstand und/oder ein Dynamic-Time-Warping-Abstand.

Alternativ oder zusätzlich kann das Vergleichen die Ermittlung einer Verteilung von Daten in den Kandidaten-Sequenzen umfassen, beispielsweise einen Histogramm-Vergleich oder eine Korrelation. Weiter alternativ kann das Vergleichen zweier Kandidaten-Sequenzen kann das Vergleichen folgender Kenngrößen umfassen: Mean, Anzahl Peaks.

Bevorzugt erfolgt das Erzeugen mehrerer Mustersequenz-Klassen in zwei Teilschritten: In einem erstem Teilschritt werden mehrere, insbesondere alle, Kandidaten-Sequenzen miteinander verglichen, um eine Ähnlichkeit jeweils zweier Kandidaten-Sequenzen zu ermitteln. In einem zweiten Teilschritt werden mehrere ähnliche Kandidaten-Sequenzen in einer neuen Mustersequenz-Klasse aggregiert sofern es nicht schon eine existierende und auf Grund der Ähnlichkeit passende Mustersequenz-Klasse gibt, der sie zugeordnet werden können. Um möglichst schnell ähnliche Mustersequenz-Klassen zu ermitteln, wird bevorzugt zunächst mit den in der letzten Zeit am häufigsten vorkommenden Mustersequenz-Klassen verglichen.

Gemäß einem Aspekt der Erfindung wird anschließend an das Erzeugen der Mustersequenz-Klassen der folgende Verfahrensschritt durchgeführt:
- Zuordnen der Mustersequenz-Klassen zu Betriebszuständen der Maschine und/oder einer Komponente der Maschine und/oder einem Werkzeug der Maschine in Abhängigkeit von durch eine Steuereinheit der Maschine bereitgestellten Betriebszustandsinformationen.

In diesem weiteren Verfahrensschritt werden die erzeugten Mustersequenz-Klassen verschiedenen Betriebszuständen der Maschine zugeordnet, wobei dies in Abhängigkeit von Betriebszustandsinformationen erfolgen kann, die korrespondierend zu der Zeitreihe der jeweiligen Messgröße den zeitlichen Verlauf des Betriebszustands der Maschine abbilden. Diese Betriebszustandsinformationen werden durch eine Steuereinheit der Maschine bereitgestellt und erlauben es, einen Kontextbezug zwischen den Mustersequenz-Klassen und dem Betriebszustand der Maschine herzustellen. Die Steuereinheit der Maschine kann die Betriebszustandsinformationen anhand eines Programmcodes zur Steuerung der Maschine ermitteln, beispielsweise anhand eines CNC-Programmcodes (CNC, engl. *computerized numerical control*)*.* Erfindungsgemäß wird eine Mustersequenz-Klasse ausgewählt, die einem Betriebszustand zugeordnet ist, der charakteristisch für die zu bestimmende Eigenschaft der Maschine ist.

Bevorzugt wird geprüft, ob die Mustersequenz-Klasse, insbesondere sämtliche Mustersequenz-Instanzen einer Mustersequenz-Klasse, genau einem Betriebszustand der Maschine und/oder einer Komponente der Maschine und/oder einem Werkzeug der Maschine, beispielsweise einem Betrieb der Maschine mit demselben Werkzeug, zugeordnet werden kann. Falls die Mustersequenz-Klasse bzw. die Mustersequenz-Instanzen der Mustersequenz-Klasse mehreren Betriebszuständen zugeordnet werden können, wird die Mustersequenz-Klasse bevorzugt in mehrere neue Mustersequenz-Klassen unterteilt, wobei jede dieser neuen Mustersequenz-Klassen genau einem Betriebszustand zugeordnet ist.

Bevorzugt wird den Mustersequenz-Klassen jeweils ein Bezeichner vergeben und es werden in den ersten Zeitreihen Sequenzen von Mustersequenz-Klassen ermittelt. Diese Sequenzen von Mustersequenz-Klassen werden durch Sequenzen ihrer Bezeichner beschrieben, durch so genannte Bezeichnungssequenzen. Bevorzugt werden in den Bezeichnungssequenzen Muster ermittelt, insbesondere durch z.B. *string clustering* und/oder durch Lösungsverfahren für das *Common Approximate Subsequence Problem.* Das Ermitteln der Muster kann hierarchisch, also wiederholt auf das Ergebnis, geschehen und ermöglicht dadurch auch die Erkennung von Sequenzen von Betriebszuständen der Maschine und/oder einer Komponente der Maschine und/oder einem Werkzeug der Maschine. Hierdurch können mit der Maschine gefertigte Produkte bzw. durch die Maschine durchgeführte Fertigungsabläufe erkannt werden.

Gemäß einem alternativen Aspekt der Erfindung wird anschließend an das Erzeugen der Mustersequenz-Klassen der folgende Verfahrensschritt durchgeführt:
- Zuordnen der Mustersequenz-Klassen zu Betriebszuständen der Maschine und/oder einer Komponente der Maschine und/oder einem Werkzeug der Maschine in Abhängigkeit von durch einen Bediener der Maschine oder ein der Maschine übergeordnetes System bereitgestellten Betriebszustandsinformationen.

In diesem weiteren Verfahrensschritt werden die erzeugten Mustersequenz-Klassen verschiedenen Betriebszuständen der Maschine und/oder einer Komponente der Maschine und/oder einem Werkzeug der Maschine zugeordnet, wobei dies in Abhängigkeit von Betriebszustandsinformationen erfolgen kann, die korrespondierend zu der Zeitreihe der jeweiligen Messgröße den zeitlichen Verlauf des Betriebszustands der Maschine abbilden. Diese Betriebszustandsinformationen werden durch einen Bediener der Maschine oder ein der Maschine übergeordnetes System bereitgestellt. Ein solches System kann beispielsweise ein *Manufacturing Execution System* (MES) sein.

Gemäß einer vorteilhaften Ausgestaltung ist die ermittelte Kenngröße der mehreren Mustersequenz-Instanzen ein Mittelwert einer Mustersequenz-Instanz und/oder ein Maximalwert einer Mustersequenz-Instanz und/oder ein Minimalwert einer Mustersequenz-Instanz. Alternativ oder zusätzlich kann die Kenngröße anhand einer Transformation der Mustersequenz-Instanzen erfolgen, beispielsweise anhand einer Transformation in den Frequenzraum, insbesondere einer Fourier-Transformation oder einer Wavelet-Transformation. Die Kenngröße kann somit eine im Zeitbereich ermittelte Kenngröße sein oder eine in einem Transformationsraum, insbesondere im Frequenzbereich, ermittelte Kenngröße oder eine Kombination aus einer im Zeitbereich ermittelte Kenngröße und einer in einem Transformationsraum, insbesondere im Frequenzbereich, ermittelten Kenngröße. Die Kenngröße kann mit der Eigenschaft der Maschine gemäß einer Zielfunktion korrelieren. Bevorzugt wird diese Zielfunktion definiert, indem sie durch einen Bediener der Maschine eingegeben wird oder sie wird, z.B. über eine Regression, über ein Neuronales Netz oder ähnliches, automatisiert ermittelt.

Eine bevorzugte Ausgestaltung sieht vor, dass zusätzlich zu dem Ermitteln mindestens einer (ersten) Kenngröße mehrerer Mustersequenz-Instanzen einer (ersten) Mustersequenz-Klasse und eines zeitlichen Verlaufs der (ersten) Kenngröße ein Ermitteln mindestens einer weiteren (zweiten) Kenngröße mehrerer Mustersequenz-Instanzen einer weiteren (zweiten) Mustersequenz-Klasse und eines zeitlichen Verlaufs dieser weiteren (zweiten) Kenngröße erfolgt. Bevorzugt ist in diesem Zusammenhang vorgesehen, dass das Bestimmen der Eigenschaft der Maschine anhand der mehreren (ersten und zweiten) ermittelten Kenngrößen und/oder anhand des zeitlichen Verlaufs der mehreren (ersten und zweiten) ermittelten Kenngröße erfolgt.

Gemäß einer vorteilhaften Ausgestaltung der Erfindung ist vorgesehen, dass anschließend an das Bestimmen der Eigenschaft der Maschine der folgende Verfahrensschritt durchgeführt wird:
- Trainieren eines selbstlernenden Bestimmungsmoduls mittels der ersten Zeitreihen und dem ermittelten Verlauf der Kenngröße.

Das selbstlernende Bestimmungsmodul ist bevorzugt dazu konfiguriert, ein Verfahren zum überwachten maschinellen Lernen (engl. *supervised machine learning*) durchzuführen. Als Verfahren zum überwachten maschinellen Lernen eigenen sich besonders Verfahren, die neuronale Netze verwenden, insbesondere Verfahren des *Deep Learnings* oder multivariate Analysemethoden, insbesondere Verfahren der Regression. Bei einem solchen Training können die ersten Zeitreihen als Eingangswerte und der ermittelte Verlauf der Kenngröße als (vermutete) Ausgangswerte eines Trainingsdatensatzes vorgegeben werden. Dabei können dem selbstlernenden Bestimmungsmodul zum Trainieren zusätzlich auch die ermittelten Mustersequenz-Instanzen und/oder eine für die jeweilige Mustersequenz-Klasse repräsentative Mustersequenz und/oder Angaben zu der zu ermittelnden Eigenschaft vorgegeben werden.

Gemäß einer vorteilhaften Ausgestaltung der Erfindung ist vorgesehen, dass anschließend an das Trainieren des selbstlernenden Bestimmungsmoduls die folgenden Verfahrensschritte durchgeführt werden:
- Erfassen einer oder mehrerer zweiter Zeitreihen einer oder mehrerer physikalischer Messgrößen;
- Bestimmen der Eigenschaft der Maschine, die messtechnisch nicht erfasst werden muss, durch das trainierte Bestimmungsmodul in Abhängigkeit von der oder den zweiten Zeitreihen.

Insofern kann das trainierte Bestimmungsmodul dazu genutzt werden, die Eigenschaft im Betrieb der Maschine allein anhand der erfassten zweiten Zeitreihen zu bestimmen. Durch die Verwendung des trainierten Bestimmungsmoduls wird es (nach dem Trainieren) möglich, auf ein weiteres Detektieren von Veränderungsstellen in den (zweiten) Zeitreihen sowie einem Extrahieren von Mustersequenzen in diese (zweite) Zeitreihen zu verzichten. Vielmehr kann die Eigenschaft der Maschine ausschließlich durch das trainierte Bestimmungsmodul bestimmt werden. Hierdurch kann das Bestimmen der Eigenschaft beschleunigt werden und/oder mit einem reduzierten Rechenaufwand erfolgen.

In diesem Zusammenhang hat es sich als vorteilhaft erwiesen, wenn das (trainierte) Bestimmungsmodul in einer Recheneinheit der Maschine vorgesehen ist und ein Modul zum Trainieren des Bestimmungsmoduls separat von der Maschine vorgesehen ist, beispielsweise als Cloud-Recheneinheit. Auch das Detektieren von Veränderungsstellen und/oder das Extrahieren von Mustersequenz-Instanzen und/oder das Erzeugen von Mustersequenz-Klassen und/oder das Ermitteln der Kenngröße erfolgt bevorzugt mittels eines Moduls, das separat von der Maschine vorgesehen ist, beispielsweise als Cloud-Recheneinheit. Dies hat zum Vorteil, dass solche Verfahrensschritte, die lediglich initial bzw. zum Trainieren des Bestimmungsmoduls erforderlich sind, nicht in einer Recheneinheit der Maschine vorgehalten werden müssen, so dass diese weniger mit geringerem Hard- und/oder Softwareaufwand ausgestaltet werden kann.

Ein weiterer Gegenstand der Erfindung ist ein computerimplementiertes Verfahren zum Bestimmen eines voraussichtlichen Qualitätszustands eines mit einer Maschine gefertigten Bauteils, wobei ein vorstehend beschriebenes Verfahren zum Bestimmen einer Eigenschaft einer Maschine durchgeführt wird, wobei die Eigenschaft der Maschine ein Abnutzungszustand der Maschine ist und der voraussichtliche Qualitätszustand eines mit der Maschine gefertigten Bauteils anhand des durch das trainierte Bestimmungsmodul bestimmten Abnutzungszustands in Abhängigkeit von der oder den zweiten Zeitreihen bestimmt wird. Hierdurch wird es möglich, ausgehend von der ermittelten Eigenschaft der Maschine und den Zeitreihreihen, insbesondere in Kombination mit allen zuvor beschriebenen Verarbeitungsmöglichkeiten, einen Rückschluss auf den voraussichtlichen Qualitätszustand eines mit dieser Maschine gefertigten Bauteils zu ziehen.

Ein weiterer Gegenstand der Erfindung ist ein System zum Bestimmen einer Eigenschaft einer Maschine, insbesondere einer Werkzeugmaschine, ohne messtechnisches Erfassen der Eigenschaft, umfassend einen Prozessor, der zur Ausführung eines vorstehend beschriebenen Verfahrens zum Bestimmen einer Eigenschaft einer Maschine konfiguriert ist.

Bei dem System können dieselben Vorteile erreicht werden, wie sie im Zusammenhang mit dem Verfahren zum Bestimmen einer Eigenschaft einer Maschine beschrieben worden sind.

Gemäß einer vorteilhaften Ausgestaltung weist das System eine erste Einheit auf, die zur Anordnung im Bereich der Maschine konfiguriert ist, und eine zweite Einheit aufweist, die zur Anordnung separat von der Maschine, insbesondere als Teil einer Cloud, konfiguriert ist, wobei die zweite Einheit eine Speichereinrichtung aufweist, in welcher die erzeugten Mustersequenz-Klassen gespeichert werden. Durch die Anordnung der Speichereinrichtung für die Mustersequenz-Klassen wird es möglich, eine gemeinsame Speichereinrichtung für eine Vielzahl von Maschinen zu verwenden. Die Mustersequenz-Klassen können als Teil einer gemeinsamen Datenbank für mehrere baugleiche oder verschiedenen Maschinen gespeichert werden, wobei den Mustersequenz-Klassen bevorzugt Betriebszustände der Maschine und/oder einer Komponente der Maschine und/oder einem Werkzeug der Maschine zugeordnet sind.

In diesem Zusammenhang hat es sich als vorteilhaft erwiesen, wenn die erste Einheit eine Puffer-Speichereinrichtung aufweist, in welcher eine Teilmenge der in der Speichereinrichtung der zweiten Einheit gespeicherten Mustersequenz-Klassen gespeichert sind. Bevorzugt sind in der Puffer-Speichereinrichtung häufig genutzte Mustersequenz-Klassen gespeichert, beispielsweise solche Mustersequenz-Klassen, die in einem abgelaufenen Zeitraum genutzt wurden. Hierdurch kann der Zugriff auf häufig genutzte Mustersequenz-Klassen beschleunigt werden.

Beschrieben wird ferner die Verwendung eines vorstehend genannten Systems zum Bestimmen eines Abnutzungszustands einer als Werkzeugmaschine oder als Industrieroboter ausgebildeten Maschine.

Ein weiterer Gegenstand der Erfindung ist ein Computerprogramm umfassend Befehle, die bei der Ausführung des Computerprogramms durch einen Computer diesen veranlassen, ein vorstehend erläutertes Verfahren zum Bestimmen einer Eigenschaft einer Maschine auszuführen.

Ein weiterer Gegenstand der Erfindung ist ein computerlesbares Medium umfassend Befehle, die bei der Ausführung der Befehle durch einen Computer diesen veranlassen, ein vorstehend erläutertes Verfahren zum Bestimmen einer Eigenschaft einer Maschine auszuführen.

Weitere Einzelheiten und Vorteile der Erfindung sollen nachfolgend anhand des in den Zeichnungen dargestellten Ausführungsbeispiels erläutert werden. Die Zeichnungen illustrieren dabei lediglich eine beispielhafte Ausführungsform der Erfindung, welche den Erfindungsgedanken nicht einschränkt. Hierin zeigt:
- Fig. 1: ein Ablaufdiagramm eines Verfahrens zum Bestimmen einer Eigenschaft einer Maschine gemäß einem Ausführungsbeispiel der Erfindung;
- Fig. 2: eine beispielhafte Zeitreihe einer physikalischen Messgröße einer Maschine;
- Fig. 3: die beispielhafte Zeitreihe mit markierten Veränderungsstellen;
- Fig. 4: eine beispielhafte Zeitreihe mit extrahierten Mustersequenz-Instanzen; und
- Fig. 5: eine beispielhafte Zeitreihe mit extrahierten Mustersequenz-Instanzen derselben Mustersequenz-Klasse und ein zeitlicher Verlauf einer beispielhaften Kenngröße der Mustersequenz-Instanzen.

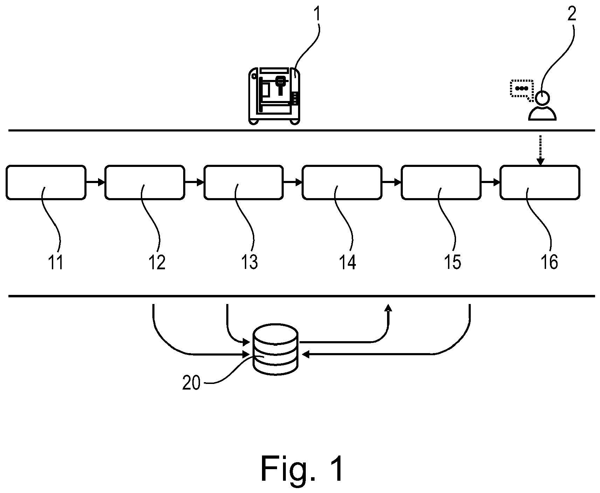

In der **Fig. 1** ist ein schematisches Ablaufdiagramm eines Ausführungsbeispiels eines erfindungsgemäßen Verfahrens zum Bestimmen einer Eigenschaft einer als Werkzeugmaschine ausgebildeten Maschine 1, gezeigt, wobei die Eigenschaft nicht durch Messungen erfasst werden muss. Im vorliegenden Ausführungsbeispiel wird als Eigenschaft ein Abnutzungszustand insbesondere am *Tool Center Point* ermittelt.

Bei diesem Verfahren werden durch an der Maschine 1 angeordnete Sensoreinrichtungen eine oder mehrere Zeitreihen einer oder mehrerer physikalischer Messgrößen erfasst. Die Sensoreinrichtungen umfassen bevorzugt Sensoren, die in der Maschine 1 installiert sind, um im Betrieb der Maschine 1 einen Soll-Ist-Vergleich zu ermöglichen und/oder die Maschine 1 zu steuern. Insofern ist es zur Durchführung des Verfahrens nicht erforderlich, zusätzliche Sensoren an der Maschine vorzusehen. Geleichwohl kann das Verfahren mit solchen Sensoren durchgeführt werden, die zusätzlich zu den ohnehin an der Maschine 1 vorhandenen Sensoren vorgesehen werden.

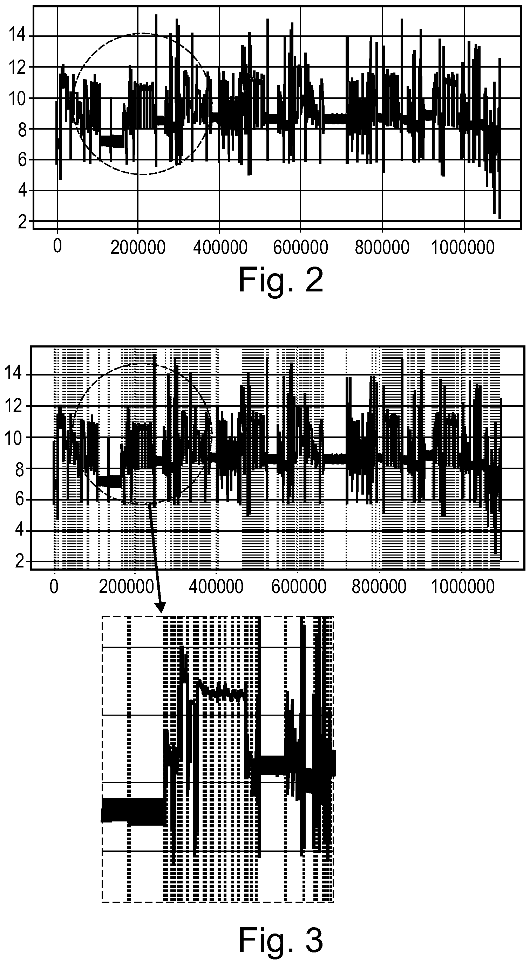

Eine beispielhafte Zeitreihe einer Messgröße ist in Fig. 2 gezeigt. Bei der Messgröße kann es sich beispielsweise um eine Amplitude eines Stroms in einem Elektromotor handeln, der zum Antrieb einer Komponente der Maschine 1 konfiguriert ist, beispielsweise zum Antrieb eines Werkzeugs der Maschine 1. So kann der Elektromotor z.B. der Motor einer Spindel mit einem Werkzeughalter für ein Werkzeug der Maschine 1 sein.

Die erfassten Zeitreihen werden ausgewertet, um den Abnutzungszustand zu ermitteln. Dabei werden in einem Detektionsschritt 11 Veränderungsstellen in der oder den ersten Zeitreihen detektiert. Bevorzugt wird ein Algorithmus zur Wechselpunkterkennung (engl. *change point detection*) verwendet, um Veränderungsstellen, insbesondere Wechselpunkte, in den Zeitreihen zu ermitteln, an denen sich der Verlauf der jeweiligen Zeitreihe verändert. Derartige Wechselpunkte sind durch vertikale Linien in Fig. 3 repräsentiert.

In einem dem Detektionsschritt 11 nachfolgenden Extraktionsschritt 12 werden basierend auf den detektierten Veränderungsstellen Mustersequenz-Instanzen aus der jeweiligen Zeitreihe extrahiert. Hierzu werden zunächst sogenannte Kandidaten-Sequenzen zwischen zwei Veränderungsstellen identifiziert. Es wird geprüft, ob eine solche Kandidaten-Sequenz mindestens eine vorgegebenen Mindest-Sequenzlänge aufweist. Kandidaten-Sequenzen. Deren Länge geringer ist als die Mindest-Sequenzlänge werden verworfen. Die übrigen Kandidaten-Sequenzen verglichen werden als Mustersequenz-Instanz angesehen.

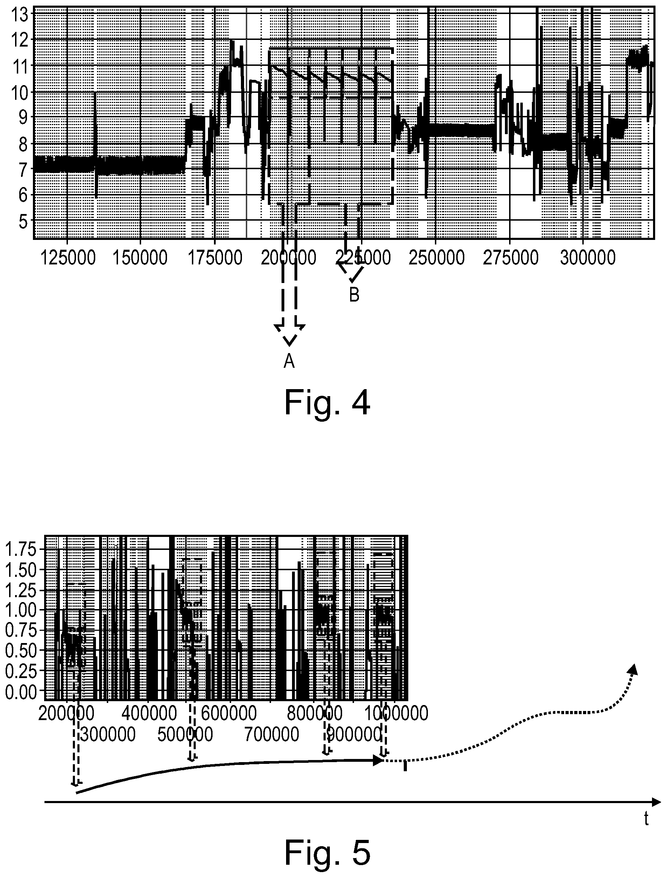

In einem nachfolgenden Klassen-Erzeugungsschritt 13 werden dann mehrere Mustersequenz-Klassen in Abhängigkeit von den extrahierten Mustersequenz-Instanzen erzeugt. Hierbei kommt ein Verfahren zum unüberwachten maschinellen Lernen zur Anwendung, bei welchem in der Menge der Mustersequenz-Instanzen selbsttätig Mustersequenz-Klassen erkannt werden, ohne dass die Zuordnung einzelner Mustersequenz-Instanzen zu Mustersequenz-Klassen im Vorhinein bekannt ist. **Fig. 4** zeigt eine Zeitreihe, in welcher zwei erste Mustersequenz-Instanzen erkannt worden sind, die einer ersten Mustersequenz-Klasse A zugeordnet sind und fünf zweite Mustersequenz-Instanzen, die einer zweiten Mustersequenz-Klasse B zugeordnet sind. Diesen Mustersequenz-Klassen A, B können Bezeichner, sogenannte *Labels* zugeordnet werden, die allein durch das Verfahren zum unüberwachten maschinellen Lernen erzeugt sind. Ferner ist es möglich, apriorisches Wissen und/oder menschliches Wissen zu verwenden, um geeignete Bezeichner für die ermittelten Mustersequenz-Klassen zu erhalten, die eine semantische Bedeutung haben. Menschliches Wissen kann beispielsweise im Rahmen eines Abfrageschritts eingebracht werden, in welchem ein Benutzer der Maschine den ermittelten Mustersequenz-Klassen einen Bezeichner, insbesondere mit semantischer Bedeutung, zuordnet.

In einem weiteren Verfahrensschritt werden die erzeugten Mustersequenz-Klassen verschiedenen Betriebszuständen der Maschine zugeordnet. Diese Zuordnung erfolgt in Abhängigkeit von Betriebszustandsinformationen, die korrespondierend zu der Zeitreihe der jeweiligen Messgröße den zeitlichen Verlauf des Betriebszustands der Maschine abbilden. Solche Betriebszustandsinformationen werden durch eine Steuereinheit der Maschine bereitgestellt und erlauben es, einen Kontextbezug zwischen den Mustersequenz-Klassen und dem Betriebszustand der Maschine herzustellen. Die Steuereinheit der Maschine kann die Betriebszustandsinformationen anhand eines Programmcodes zur Steuerung der Maschine ermitteln, beispielsweise anhand eines CNC-Programmcodes. Auf diese Weise kann beispielsweise ermittelt werden, dass die in **Fig. 4** gezeigte Mustersequenz-Klasse B einem Betriebszustand entspricht, in welchem ein Werkzeug der Maschine 1 gedreht wird und die Mustersequenz-Klasse A einem dem Drehen des Werkzeugs vorhergehenden Vorbereitungsschritt entspricht.

In einem Ermittlungsschritt 14 wird dann mindestens eine Kenngröße mehrerer Mustersequenz-Instanzen derselben Mustersequenz-Klasse, insbesondere aller Mustersequenz-Instanzen derselben Mustersequenz-Klasse ermittelt und ein zeitlicher Verlauf dieser Kenngröße erstellt, vgl. **Fig. 1****.** Bei der Kenngröße kann es sich beispielweise um einen Mittelwert der Mustersequenz-Instanzen oder die Standardabweichung handeln. Denkbar sind aber auch andere Kenngrößen, wie beispielsweise ein Maximalwert, ein Minimalwert oder eine anhand einer Fourier- oder Wavelet-Transformation ermittelte Größe. Ein beispielhafter Verlauf einer solchen Kenngröße ist schematisch in **Fig. 5** gezeigt. Die zu bestimmende Eigenschaft, hier der Abnutzungsgrad insbesondere am *Tool Center Point*, ist abhängig von dieser Kenngröße. Somit kann dann anhand der ermittelten Kenngröße und/oder anhand des zeitlichen Verlaufs der ermittelten Kenngröße die Eigenschaft der Maschine bestimmt werden.

Optional kann in einem Voraussageschritt 15 über das Bestimmen der Eigenschaft hinaus eine Voraussage zu dem weiteren Verlauf der Eigenschaft erhalten werden. Hierzu wird, wie in **Fig.** 5 durch die gestrichelte Linie angedeutet, eine Voraussage über den Verlauf der Kenngröße erstellt und daraus auf die zu bestimmende Eigenschaft rückgeschlossen. Die Voraussage kann statistisch oder durch eine Simulation ermittelt werden.

Den Mustersequenz-Klassen wird jeweils ein Bezeichner vergeben - hier die Bezeichner A und B. Optional kann in der Zeitreihe eine Sequenz dieser Mustersequenz-Klassen A, B ermittelt werden. Diese Sequenzen von Mustersequenz-Klassen werden durch Sequenzen ihrer Bezeichner beschrieben, durch so genannte Bezeichnungssequenzen. Bevorzugt werden in den Bezeichnungssequenzen Muster ermittelt, insbesondere durch z.B. *string clustering* und/oder durch Lösungsverfahren für das *Common Approximate Subsequence Problem.* Das Ermitteln der Muster kann hierarchisch, also wiederholt auf das Ergebnis, geschehen und ermöglicht dadurch auch die Erkennung von Sequenzen von Betriebszuständen der Maschine und/oder einer Komponente der Maschine und/oder einem Werkzeug der Maschine. Hierdurch können mit der Maschine gefertigte Produkte bzw. durch die Maschine durchgeführte Fertigungsabläufe erkannt werden.

Optional kann vorgesehen sein, dass anschließend an das Bestimmen der Eigenschaft der Maschine ein selbstlernendes Bestimmungsmodul mittels der ersten Zeitreihen und dem ermittelten Verlauf der Kenngröße trainiert wird, vgl. Trainingsschritt 16 in **Fig. 1****.** Das selbstlernende Bestimmungsmodul ist bevorzugt dazu konfiguriert, ein Verfahren zum überwachten maschinellen Lernen durchzuführen. Bei dem Training werden die ersten Zeitreihen als Eingangswerte und der zuvor ermittelte Verlauf der Kenngröße als Ausgangswert eines Trainingsdatensatzes vorgegeben. Dabei können dem selbstlernenden Bestimmungsmodul zum Trainieren zusätzlich auch die ermittelten Mustersequenz-Instanzen und/oder eine für die jeweilige Mustersequenz-Klasse repräsentative Mustersequenz und/oder Angaben zu der zu ermittelnden Eigenschaft vorgegeben werden.

Das selbstlernende Bestimmungsmodul kann anschließend an das Trainieren dazu eingesetzt werden, neu erfasste zweite Zeitreihen selbsttätig auszuwerten und anhand dieser die zu ermittelnde Eigenschaft der Maschine zu bestimmen. Es ist also eine direkte Übersetzung von den erfassten Zeitreihen zu der Eigenschaft der Maschine, hier dem Abnutzungszustand, möglich. Hierzu muss das trainierte Bestimmungsmodul nicht die zuvor beschrieben Verfahrensschritte 11-15 ausführen. Vielmehr erlaubt das in dem trainierten Bestimmungsmodul durch das Training angehäufte Wissen, eine Ermittlung der Eigenschaft allein anhand der neu erfassten Zeitreihen durchzuführen, wodurch der Rechenaufwand reduziert wird. Somit führt das trainierte selbstlernende Bestimmungsmoduls die folgenden Verfahrensschritte aus:
- Erfassen einer oder mehrerer zweiter Zeitreihen einer oder mehrerer physikalischer Messgrößen;
- Bestimmen der Eigenschaft der Maschine, die messtechnisch nicht erfasst werden muss, durch das trainierte Bestimmungsmodul in Abhängigkeit von der oder den zweiten Zeitreihen.

Es ist vorteilhaft, wenn das trainierte Bestimmungsmodul in einer Recheneinheit der Maschine 1 vorgesehen ist und ein Modul zum Trainieren des Bestimmungsmoduls separat von der Maschine vorgesehen ist, beispielsweise als Cloud-Recheneinheit. Auch das Detektieren von Veränderungsstellen und/oder das Extrahieren von Mustersequenz-Instanzen und/oder das Erzeugen von Mustersequenz-Klassen und/oder das Ermitteln der Kenngröße erfolgt bevorzugt mittels eines Moduls, das separat von der Maschine vorgesehen ist, beispielsweise als Cloud-Recheneinheit. Dies hat zum Vorteil, dass solche Verfahrensschritte, die lediglich initial bzw. zum Trainieren des Bestimmungsmoduls erforderlich sind, nicht in einer Recheneinheit der Maschine vorgehalten werden müssen, so dass diese weniger mit geringerem Hard- und/oder Softwareaufwand ausgestaltet werden kann. Auch können sämtliche Daten, die zum Trainieren des Bestimmungsmoduls erforderlich sind, beispielsweise die Mustersequenz-Klassen in einer Cloud-Speichereinrichtung 20 gespeichert sein, die entfernt von der Maschine 1 angeordnet ist und über ein Netzwerk mit der Maschine verbunden ist.

Ferner kann ein computerimplementiertes Verfahren zum Bestimmen eines voraussichtlichen Qualitätszustands eines mit der Maschine 1 gefertigten Bauteils durchgeführt werden, wobei ein vorstehend beschriebenes Verfahren zum Bestimmen einer Eigenschaft der Maschine 1 durchgeführt wird, wobei die Eigenschaft der Maschine ein Abnutzungszustand der Maschine ist und der voraussichtliche Qualitätszustand eines mit der Maschine gefertigten Bauteils anhand des durch das trainierte Bestimmungsmodul bestimmten Abnutzungszustands in Abhängigkeit von der oder den zweiten Zeitreihen bestimmt wird.

Hierdurch wird es möglich, ausgehend von der ermittelten Eigenschaft der Maschine 1 einen Rückschluss auf den voraussichtlichen Qualitätszustand eines mit dieser Maschine 1 gefertigten Bauteils zu ziehen.

## Patentansprüche

1. Computerimplementiertes Verfahren zum Bestimmen einer Eigenschaft einer Maschine, insbesondere einer Werkzeugmaschine, ohne messtechnisches Erfassen der Eigenschaft, umfassend das
- Erfassen einer oder mehrerer erster Zeitreihen einer oder mehrerer physikalischer Messgrößen der Maschine;
**gekennzeichnet durch** die weiteren Verfahrensschritte:
- Detektieren von Veränderungsstellen in der oder den ersten Zeitreihen;
- Extrahieren von Mustersequenz-Instanzen aus den ersten Zeitreihen basierend auf den detektierten Veränderungsstellen;
- Erzeugen mehrerer Mustersequenz-Klassen in Abhängigkeit von den extrahierten Mustersequenz-Instanzen, wobei die Mustersequenz-Klassen jeweils eine Vielzahl von Mustersequenz-Instanzen umfassen, die eine bestimmte Gemeinsamkeit aufweisen;
- Ermitteln mindestens einer Kenngröße mehrerer Mustersequenz-Instanzen derselben Mustersequenz-Klasse und eines zeitlichen Verlaufs der Kenngröße;
- Bestimmen einer Eigenschaft einer Maschine anhand der ermittelten Kenngröße und/oder anhand des zeitlichen Verlaufs der ermittelten Kenngröße;
wobei anschließend an das Erzeugen der Mustersequenz-Klassen einer der folgenden Verfahrensschritte durchgeführt wird:
- Zuordnen der Mustersequenz-Klassen zu Betriebszuständen der Maschine und/oder einer Komponente der Maschine und/oder einem Werkzeug der Maschine in Abhängigkeit von durch eine Steuereinheit der Maschine bereitgestellten Betriebszustandsinformationen; oder
- Zuordnen der Mustersequenz-Klassen zu Betriebszuständen der Maschine und/oder einer Komponente der Maschine und/oder einem Werkzeug der Maschine in Abhängigkeit von durch einen Bediener der Maschine oder ein der Maschine übergeordnetes System bereitgestellten Betriebszustandsinformationen,
dergestalt, dass eine Mustersequenz-Klasse ausgewählt wird, die einem Betriebszustand zugeordnet ist, der charakteristisch für die zu bestimmende Eigenschaft der Maschine ist.

2. Computerimplementiertes Verfahren nach Anspruch 1, **dadurch gekennzeichnet, dass** die Eigenschaft der Maschine eine Angabe zu einem Abnutzungszustand der Maschine oder eines Bauteils der Maschine oder zu einer Temperatur in einem vorgegebenen Bereich der Maschine ist.

3. Computerimplementiertes Verfahren nach einem der vorhergehenden Ansprüche, **dadurch gekennzeichnet, dass** die eine oder die mehreren physikalischen Messgrößen der Maschine ein Drehmoment und/oder eine Drehgeschwindigkeit und/oder ein elektrischer Strom und/oder eine elektrische Spannung und/oder eine Energie und/oder eine Temperatur und/oder eine Beschleunigung und/oder eine Geschwindigkeit und/oder eine Kraft und/oder eine Lageposition ist.

4. Computerimplementiertes Verfahren nach einem der vorhergehenden Ansprüche, **dadurch gekennzeichnet, dass** die eine oder die mehreren physikalischen Messgrößen der Maschine durch eine Sensoreinrichtung der Maschine erfasst werden.

5. Computerimplementiertes Verfahren nach einem der vorhergehenden Ansprüche, **dadurch gekennzeichnet, dass** das Detektieren von Veränderungsstellen in der oder den Zeitreihen das Detektieren von Wechselpunkten und/oder das Detektieren von vorgegebenen Wechselsequenzen umfasst.

6. Computerimplementiertes Verfahren nach einem der vorhergehenden Ansprüche, **dadurch gekennzeichnet, dass** das Detektieren von Veränderungsstellen in der oder den ersten Zeitreihen direkt anhand der Zeitreihe erfolgt und/oder indirekt anhand einer Transformation der Zeitreihe erfolgt, beispielsweise anhand einer Fourier-Transformation oder einer Wavelet-Transformation.

7. Computerimplementiertes Verfahren nach einem der vorhergehenden Ansprüche, **dadurch gekennzeichnet, dass** das Extrahieren von Mustersequenz-Instanzen aus den ersten Zeitreihen basierend auf den detektierten Veränderungsstellen ein Ermitteln einer Kandidaten-Sequenz zwischen zwei Veränderungsstellen umfasst.

8. Computerimplementiertes Verfahren nach einem der vorhergehenden Ansprüche, **dadurch gekennzeichnet, dass** das Erzeugen mehrerer Mustersequenz-Klassen durch ein Verfahren zum unüberwachten maschinellen Lernen erfolgt.

9. Computerimplementiertes Verfahren nach einem der vorhergehenden Ansprüche, **dadurch gekennzeichnet, dass** die ermittelte Kenngröße ein Mittelwert einer Mustersequenz-Instanz und/oder ein Maximalwert einer Mustersequenz-Instanz und/oder ein Minimalwert einer Mustersequenz-Instanz ist.

10. Computerimplementiertes Verfahren nach einem der vorhergehenden Ansprüche, **dadurch gekennzeichnet, dass** anschließend an das Bestimmen der Eigenschaft der Maschine der folgende Verfahrensschritt durchgeführt wird:
- Trainieren eines selbstlernenden Bestimmungsmoduls mittels der ersten Zeitreihen und dem ermittelten Verlauf der Kenngröße.

11. Computerimplementiertes Verfahren nach Anspruch 10, **dadurch gekennzeichnet, dass** anschließend an das Trainieren des selbstlernenden Bestimmungsmoduls die folgenden Verfahrensschritte durchgeführt werden:
- Erfassen einer oder mehrerer zweiter Zeitreihen einer oder mehrerer physikalischer Messgrößen;
- Bestimmen der Eigenschaft der Maschine, die messtechnisch nicht erfasst werden muss, durch das trainierte Bestimmungsmodul in Abhängigkeit von der oder den zweiten Zeitreihen.

12. Computerimplementiertes Verfahren zum Bestimmen eines voraussichtlichen Qualitätszustands eines mit einer Maschine gefertigten Bauteils, wobei ein Verfahren zum Bestimmen einer Eigenschaft einer Maschine nach Anspruch 11 durchgeführt wird, wobei die Eigenschaft der Maschine ein Abnutzungszustand der Maschine ist und der voraussichtliche Qualitätszustand eines mit der Maschine gefertigten Bauteils anhand des durch das trainierte Bestimmungsmodul bestimmten Abnutzungszustands in Abhängigkeit von der oder den zweiten Zeitreihen bestimmt wird.

13. System zum Bestimmen einer Eigenschaft einer Maschine, insbesondere einer Werkzeugmaschine, ohne messtechnisches Erfassen der Eigenschaft, umfassend einen Prozessor, der zur Ausführung eines Verfahrens nach einem der Ansprüche 1 bis 9 konfiguriert ist.

14. System nach Anspruch 13, **dadurch gekennzeichnet, dass** das System eine erste Einheit aufweist, die zur Anordnung im Bereich der Maschine konfiguriert ist, und eine zweite Einheit aufweist, die zur Anordnung separat von der Maschine, insbesondere als Teil einer Cloud, konfiguriert ist, wobei die zweite Einheit eine Speichereinrichtung aufweist, in welcher die erzeugten Mustersequenz-Klassen gespeichert werden.

15. Verwendung eines Systems nach Anspruch 13 oder 14 zum Bestimmen eines Abnutzungszustands einer als Werkzeugmaschine oder als Industrieroboter ausgebildeten Maschine.

16. Computerprogramm umfassend Befehle, die bei der Ausführung des Computerprogramms durch einen Computer diesen veranlassen, ein Verfahren nach einem der Ansprüche 1 bis 11 auszuführen.

17. Computerlesbares Medium umfassend Befehle, die bei der Ausführung der Befehle durch einen Computer diesen veranlassen, ein Verfahren nach einem der Ansprüche 1 bis 11 auszuführen.

## Claims

1. A computer-implemented method for determining a property of a machine, in particular a machine tool, without metrologically capturing the property, comprising:
- capturing of one or more first time series of one or more physical measurement variables of the machine;
**characterised by** the further method steps:
- detecting changing points in the one or more first time series;
- extracting pattern-sequence instances from the first time series on the basis of the detected changing points;
- producing a plurality of pattern-sequence classes in accordance with the extracted pattern-sequence instances, wherein the pattern-sequence classes each comprise a plurality of pattern-sequence instances having a certain commonality;
- ascertaining at least one characteristic of a plurality of pattern-sequence instances of the same pattern-sequence class and a time curve of the characteristic;
- determining a property of a machine using the ascertained characteristic and/or using the time curve of the ascertained characteristic;
wherein one of the following method steps is carried out after the production of the pattern-sequence classes:
- assigning the pattern-sequence classes to operating states of the machine and/or a component of the machine and/or a tool of the machine according to operating state information provided by a control unit of the machine; or
- assigning the pattern-sequence classes to operating states of the machine and/or a component of the machine and/or a tool of the machine according to operating state information provided by an operator of the machine or a system which is superordinate to the machine,
such that a pattern-sequence class is selected which is assigned to an operating state which is characteristic of the property of the machine to be determined.

2. The computer-implemented method according to claim 1, **characterised in that** the property of the machine is an indication of a state of wear of the machine, or of a component of the machine, or of a temperature in a predetermined region of the machine.

3. The computer-implemented method according to any one of the preceding claims, **characterised in that** the one or more physical measurement variables of the machine is a torque and/or a rotational speed and/or an electrical current and/or an electrical voltage and/or an energy and/or a temperature and/or an acceleration and/or a speed and/or a force and/or a position location.

4. The computer-implemented method according to any one of the preceding claims, **characterised in that** the one or more physical measurement variables of the machine are captured by a sensor device of the machine.

5. The computer-implemented method according to any one of the preceding claims, **characterised in that** the detection of changing points in the one or more time series comprises the detection of change points and/or the detection of predetermined change sequences.

6. The computer-implemented method according to any one of the preceding claims, **characterised in that** the detection of changing points in the one or more first time series takes place directly using the time series and/or indirectly using a transformation of the time series, for example using a Fourier transform or a wavelet transform.

7. The computer-implemented method according to any one of the preceding claims, **characterised in that** the extraction of pattern-sequence instances from the first time series on the basis of the detected changing points comprises ascertaining a candidate sequence between two changing points.

8. The computer-implemented method according to any one of the preceding claims, **characterised in that** the production of a plurality of pattern-sequence classes is carried out by means of an unsupervised machine learning method.

9. The computer-implemented method according to any one of the preceding claims, **characterised in that** the ascertained characteristic is a mean value of a pattern-sequence instance and/or a maximum value of a pattern-sequence instance and/or a minimum value of a pattern-sequence instance.

10. The computer-implemented method according to any one of the preceding claims, **characterised in that** the following method step is carried out after the determination of the property of the machine:
- training a self-learning determination module by means of the first time series and the ascertained characteristic curve.

11. The computer-implemented method according to claim 10, **characterised in that** the following method steps are carried out after the training of the self-learning determination module:
- capturing of one or more second time series of one or more physical measurement variables;
- determining the property of the machine that does not have to be metrologically captured by the trained determination module according to the one or more second time series.

12. A computer-implemented method for determining an estimated quality condition of a component manufactured with a machine, wherein a method for determining a property of a machine according to claim 11 is carried out, wherein the property of the machine is a state of wear of the machine and the estimated quality condition of a component manufactured with the machine is determined using the state of wear determined by the trained determination module according to the one or more second time series.

13. A system for determining a property of a machine, in particular a machine tool, without metrologically capturing the property, comprising a processor, which is configured to execute a method according to any one of claims 1 to 9.

14. The system according to claim 13, **characterised in that** the system comprises a first unit, which is configured to be arranged in the region of the machine, and a second unit, which is configured to be arranged separately from the machine, in particular as part of a cloud, wherein the second unit has a memory device in which the produced pattern-sequence classes are stored.

15. A use of a system according to claim 13 or 14 for determining a state of wear of a machine designed as a machine tool or as an industrial robot.

16. A computer program comprising commands which, when the computer program is executed by a computer, cause said computer to carry out a method according to any one of claims 1 to 11.

17. A computer-readable medium comprising commands which, when the instructions are executed by a computer, cause said computer to carry out a method according to any one of claims 1 to 11.

## Revendications

1. Procédé mis en oeuvre par ordinateur d'établissement d'une propriété d'une machine, en particulier d'une machine-outil, sans détection de la propriété à l'aide d'une technique de mesure, comprenant la
- détection d'une ou de plusieurs premières séries temporelles d'une ou de plusieurs grandeurs physiques de mesure de la machine ;
**caractérisé par** les autres étapes de procédé consistant à :
- détecter des points de changement dans la ou les premières séries temporelles ;
- extraire des instances de séquence de motifs des premières séries temporelles sur la base des points de changement détectés ;
- générer une pluralité de classes de séquences de motifs en fonction des instances de séquences de motifs extraites, les classes de séquences de motifs comprenant chacune une pluralité d'instances de séquences de motifs présentant une certaine similitude ;
- déterminer au moins un paramètre d'une pluralité d'instances de séquences de motifs de la même classe de séquences de motifs et un profil temporel du paramètre ;
- établir une propriété d'une machine à l'aide du paramètre défini et/ou à l'aide du profil temporel du paramètre défini ;
l'une des étapes du procédé suivantes étant effectuée après la génération des classes de séquence de motifs :
- l'affectation des classes de séquences de motifs à des états de fonctionnement de la machine et/ou d'un composant de la machine et/ou d'un outil de la machine en fonction d'informations d'état de fonctionnement fournies par une unité de commande de la machine ; ou
- l'affectation des classes de séquences de motifs à des états de fonctionnement de la machine et/ou d'un composant de la machine et/ou d'un outil de la machine en fonction d'informations d'état de fonctionnement fournies par un opérateur de la machine ou un système d'un niveau supérieur à la machine,
de façon qu'une classe de séquences de motifs soit sélectionnée, laquelle est affectée à un état de fonctionnement qui est caractéristique de la propriété de la machine à établir.

2. Procédé mis en oeuvre par ordinateur selon la revendication 1, **caractérisé en ce que** la propriété de la machine est une indication d'un état d'usure de la machine ou d'un composant de la machine ou d'une température dans une zone prédéfinie de la machine.

3. Procédé mis en oeuvre par ordinateur selon l'une quelconque des revendications précédentes, **caractérisé en ce que** la ou les grandeurs physiques mesurées de la machine sont un couple et/ou une vitesse de rotation et/ou un courant électrique et/ou une tension électrique et/ou une énergie et/ou une température et/ou une accélération et/ou une vitesse et/ou une force et/ou une position.

4. Procédé mis en oeuvre par ordinateur selon l'une quelconque des revendications précédentes, **caractérisé en ce que** la ou les grandeurs physiques mesurées de la machine sont détectées par un ensemble capteur de la machine.

5. Procédé mis en oeuvre par ordinateur selon l'une quelconque des revendications précédentes, **caractérisé en ce que** la détection de points de changement dans la ou les séries temporelles comprend la détection de points de changement et/ou la détection de séquences de changement prédéfinies.

6. Procédé mis en oeuvre par ordinateur selon l'une quelconque des revendications précédentes, **caractérisé en ce que** la détection de points de changement dans la ou les premières séries temporelles s'effectue directement à l'aide de la série temporelle et/ou indirectement à l'aide d'une transformation de la série temporelle, par exemple à l'aide d'une transformée de Fourier ou d'une transformée en ondelettes.

7. Procédé mis en oeuvre par ordinateur selon l'une quelconque des revendications précédentes, **caractérisé en ce que** l'extraction d'instances de séquence de motifs à partir des premières séries temporelles sur la base des points de changement détectés comprend la détermination d'une séquence candidate entre deux points de changement.

8. Procédé mis en oeuvre par ordinateur selon l'une quelconque des revendications précédentes, **caractérisé en ce que** la génération d'une pluralité de classes de séquences de motifs est effectuée par un procédé d'apprentissage automatique non supervisé.

9. Procédé mis en oeuvre par ordinateur selon l'une quelconque des revendications précédentes, **caractérisé en ce que** le paramètre défini est une valeur moyenne d'une instance de séquence de motifs et/ou une valeur maximale d'une instance de séquence de motifs et/ou une valeur minimale d'une instance de séquence de motifs.

10. Procédé mis en oeuvre par ordinateur selon l'une quelconque des revendications précédentes, **caractérisé en ce que**, à la suite de l'établissement de la propriété de la machine, l'étape de procédé suivante est effectuée :
- l'entraînement d'un module d'établissement à auto-apprentissage au moyen des premières séries temporelles et du profil défini du paramètre.

11. Procédé mis en oeuvre par ordinateur selon la revendication 10, **caractérisé en ce que** les étapes de procédé suivantes sont effectuées après l'entraînement du module d'établissement à auto-apprentissage :
- la détection d'une ou de plusieurs secondes séries temporelles d'une ou de plusieurs grandeurs physiques ;
- l'établissement de la propriété de la machine qui n'a pas à être détectée à l'aide d'une technique de mesure par le module d'établissement entraîné en fonction de la ou des secondes séries temporelles.

12. Procédé mis en oeuvre par ordinateur pour établir un état de qualité attendu d'un composant fabriqué avec une machine, un procédé pour établir une propriété d'une machine selon la revendication 11 étant effectué, la propriété de la machine étant un état d'usure de la machine et l'état de qualité attendu d'un composant fabriqué avec la machine étant établi à l'aide de l'état d'usure établi par le module d'établissement entraîné en fonction de la ou des secondes séries temporelles.

13. Système d'établissement d'une propriété d'une machine, en particulier d'une machine-outil, sans détecter la propriété à l'aide d'une technique de mesure, comprenant un processeur conçu pour effectuer un procédé selon l'une quelconque des revendications 1 à 9.

14. Système selon la revendication 13, **caractérisé en ce que** le système comprend une première unité, qui est conçue pour être agencée dans la zone de la machine, et une seconde unité, qui est conçue pour être agencée séparément de la machine, en particulier en tant que partie d'un nuage, la seconde unité présentant un dispositif de mémoire dans lequel les classes de séquences de motifs générées sont mémorisées.

15. Utilisation d'un système selon la revendication 13 ou 14 pour établir un état d'usure d'une machine conçue comme une machine-outil ou comme un robot industriel.

16. Programme informatique comprenant des instructions qui, lorsque le programme informatique est exécuté par un ordinateur, amènent ce dernier à effectuer un procédé selon l'une quelconque des revendications 1 à 11.

17. Support lisible par ordinateur comprenant des instructions qui, lorsque les instructions sont exécutées par un ordinateur, amènent ce dernier à effectuer un procédé selon l'une quelconque des revendications 1 à 11.
